(19) Europäisches Patentamt
European Patent Office
Office européen des brevets

(11) **EP 0 757 019 B1**

(12) **EUROPÄISCHE PATENTSCHRIFT**

(45) Veröffentlichungstag und Bekanntmachung des Hinweises auf die Patenterteilung:
**04.10.2001 Patentblatt 2001/40**

(21) Anmeldenummer: **94920599.1**

(22) Anmeldetag: **21.06.1994**

(51) Int Cl.$^7$: **C03B 11/06**

(86) Internationale Anmeldenummer:
**PCT/RU94/00132**

(87) Internationale Veröffentlichungsnummer:
**WO 95/23769 (08.09.1995 Gazette 1995/38)**

(54) **EINRICHTUNG ZUR FORMGEBUNG VON GLASERZEUGNISSEN**

DEVICE FOR MOULDING ARTICLES FROM GLASS

DISPOSITIF DE MOULAGE D'ARTICLES A PARTIR DE VERRE

(84) Benannte Vertragsstaaten:
**DE FR GB IT**

(30) Priorität: **03.03.1994 RU 94007552**

(43) Veröffentlichungstag der Anmeldung:
**05.02.1997 Patentblatt 1997/06**

(73) Patentinhaber: **OBNINSKOE NAUCHNO-PROIZVODSTVENNOE PREDPRIYATIE "TEKHNOLOGIA" Kaluzhskaya obl., Obninsk, 249020 (RU)**

(72) Erfinder:
• **SAMSONOV, Vyacheslav Ivanovich ul. Gagarina, 51-89 Kaluzhskaya obl., 249020 (RU)**

• **VYGORKA, Nikolai Mikhailovich ul. Mira, 20-22 Kaluzhskaya obl., 249020 (RU)**
• **KELINA, Roza Petrovna ul. Gagarina, 23-16 Kaluzhskaya obl., 249020 (RU)**
• **ROMASHIN, Alexandr Gavrilovich ul. Gorkogo, 78 Kaluzhskaya obl., 249020 (RU)**

(74) Vertreter: **Hano, Christian, Dipl.-Ing. et al v. Füner Ebbinghaus Finck Hano Mariahilfplatz 2 & 3 81541 München (DE)**

(56) Entgegenhaltungen:
**SU-A- 92 986      SU-A- 267 843
SU-A- 314 739    SU-A- 443 001
SU-A- 631 462    US-A- 4 032 317
US-A- 4 824 461**

## Beschreibung

Technisches Gebiet

Die vorliegende Erfindung bezieht sich auf die Glasindustrie, insbesondere auf eine Einrichtung zur Formgebung von Glaserzeugnissen.

Zugrundeliegender Stand der Technik

Zur Zeit haben in der Glasindustrie der Welt an dem Produktionssortiment und -volumen Glaserzeugnisse einen grossen Anteil, die nach solchen Formungsverfahren wie Pressen, Pressblasen, Schleuderformen, Senken, Blasen hergestellt werden. Dabei werden bei allen aufgezählten Methoden folgende formgebende Elemente einzeln oder in Kombination verwendet: Matrize, Stempel, Formenring, Vakuumkopf. Die thermomechanischen Betriebsbedingungen der genannten Ausrüstung bestimmen im Grunde die Qualität von hergestellten Erzeugnissen. Es lassen sich mehrere Arten von Fehlern hervorheben, die für dieses oder jenes der genannten Formungsverfahren charakteristisch sind. Eine der meistverbreiteten Fehlerarten, die hauptsächlich für das Pressen bezeichnend sind, ist die Hämmerung (Welligkeit) der Oberfläche von hergestellten Erzeugnissen. Zu den Bedingungen, die das Auftreten der Welligkeit bestimmen, gehören ein niedriges Temperaturniveau an den formgebenden Oberflächen der Elemente der Formausrüstung und eine hohe Temperaturdifferenz über deren Höhe. Durch dieselben Bedingungen werden eine grosse Wandstärke von Glaserzeugnissen sowie solche Fehler bestimmt, wie lokale Spannungen im Erzeugnis, die zur Entstehung von Mikrorissen beitragen; ungleichartige Färbung bei Erzeugnissen aus Farbglas; Wanddickendifferenz in pressgeblasenen Erzeugnissen; verschiedener Kristallisationsgrad in glaskristallischen Erzeugnissen; optische Verzerrungen und andere.

Aus dem angeführten Verzeichnis von Fehlern und diese hervorrufenden Ursachen kann man schliessen, dass besonders aktuelle Probleme, welche die Qualität von Erzeugnissen bestimmen, die folgenden sind:

- Schaffung von exothermen Bedingungen an den formgebenden Oberflächen der Formausrüstung während der plastischen Verformung einer Teilmenge des zu formenden Glases;
- Erhöhung des Temperaturniveaus der Formgebung (Temperatursteigerung an den formgebenden Oberflächen).

Die Lösung dieser Probleme liegt in der Schaffung eines effektiven Regelungssystems für den Wärmeaustausch sowohl zwischen den Elementen der Formausrüstung und einer Teilmenge des zu formenden Glases als auch unmittelbar im formenden Element selbst. Ein derartiges System soll eine geregelte intensive Wärmeumverteilung in der Formausrüstung, nämlich eine intensive Wärmeabführung aus Gebieten mit hoher Temperatur in Gebiete mit niedriger Temperatur sowie eine geregelte Wärmeabführung über die Grenzen der Ausrüstung hinaus gewährleisten. Dies würde gestatten, nicht nur die Fragen der Qualität von Erzeugnissen zu lösen, sondern auch das Tempo ihrer Herstellung (die Leistung) zu erhöhen, die Betriebszeit der Formausrüstung durch Vermeidung von lokalen Überhitzungen zu verlängern, das Sortiment der hergestellten Erzeugnisse zu erweitern.

Bekannt ist eine Einrichtung zur Formgebung von Glaserzeugnissen (US-A-3285728), enthaltend eine Formausrüstung mit solchen formenden Elementen wie Formenring und Hohlstempel. Die Einrichtung besitzt ein Regelungssystem für den Währmeaustausch sowohl zwischen der Aussenfläche des Stempels und einer Teilmenge des zu formenden Glases als auch im Hohlraum des Stempels. Dieses Währmeaustausch-Regelungssystem umfasst eine hermetisch dichte Kammer, die im Hohlraum des Stempels gebildet und mit einer Quecksilberlegierung teilweise gefüllt ist, deren Siedetemperatur der Formungstemperatur entspricht, sowie eine Vorrichtung zur Temperaturregelung der Quecksilberlegierung im Formungstemperaturbereich, welche einen gekrümmten Rohrkondensator mit Flüssigkeitskühlung enthält, der einen Eintritts- und einen Austrittskanal für das Kältemittel aufweist und in der hermetisch dichten Kammer über der Quecksilberlegierung angeordnet ist.

Die genannte Einrichtung ermöglicht es, die Temperatur der formgebenden Oberflächen des Stempels während des Formungsvorgangs zu regeln. Jedoch ist das Wärmeaustausch-Regelungssystem dieser Einrichtung recht träge, da der Hohlraum des Stempels im Augenblick, wo sich dieser in der Stellung der Formgebung befindet, bis zur Oberkante des zu formenden Erzeugnisses mit Quecksilber gefüllt ist. Dabei stellt der Stempel eine zweischichtige Ganzmetallkonstruktion (metallische Stempelwände - Quecksilber) dar, bei der die Wärmeabführung von den formgebenden Oberflächen derselben durch die Wärmeleitfähigkeit von Stempelmaterial und Quecksilber bestimmt wird. Bekanntlich ist die Ausbreitungsgeschwindigkeit der Wärme in Metallen durch Wärmeleitfähigkeit nicht ausreichend hoch, so dass dieses System der Temperaturregelung es nicht erlaubt, auf schroffe Temperaturänderungen der formgebenden Oberflächen des Stempels schnell zu reagieren, wie sie bei der Formgebung von Glaserzeugnissen stattfinden.

Ausserdem ist die Ausbildung des Kondensators in Form eines gekrümmten Rohres wenig effektiv und unzuverlässig, weil die Kontaktfläche des Kondensatorrohres mit der Innenfläche des Stempels für eine schnelle Abführung grosser Wärmeströme von Quecksilberdämpfen und für die Abkühlung dieser Dämpfe auf das Niveau der Änderung ihres Aggregatzustandes (Umwandlung in Flüssigkeit) unzureichend ist. Infolge einer hohen Aggressivität des Quecksilbers wird hierbei die Zuverlässigkeit und Lebensdauer des Kondensators erheblich gesenkt.

Darüber hinaus ist die Verwendung von Quecksilber, das ein hochtoxisches Material ist, aus der ökologischen Sicht heraus unzweckmässig.

Es ist eine Einrichtung zur Formgebung von Glaserzeugnissen (EP-A-0 598 118) bekannt, die eine Formausrüstung enthält, welche mindestens ein formendes Element mit einem hermetisch dichten Hohlraum umfasst, in dem Natrium, das heisst ein zur intensiven Dampfbildung bei der Formungstemperatur fähiges Material (Wärmeträger), in einer Menge untergebracht ist, die eine zur Füllung des Hohlraumes des formenden Elementes mit gesättigten Dämpfen dieses Materials und zur Tränkung mit ihm einer Schicht eines korrosions- und hitzebeständigen porösen Materials (Netz aus rostfreiem Stahl) erforderliche Menge um 3 bis 7% übersteigt, welches an der Innenfläche des hohlen formenden Elementes angeordnet ist und die Funktion eines "Dochtes" erfüllt, in dem flüssigmetallisches Natrium zirkuliert. Dabei besitzt die Einrichtung eine Vorrichtung zur Temperaturregelung des Natriums im Formungstemperaturbereich, die mit einer Kältemittelquelle in Verbindung steht, und eine Vorrichtung zum Evakuieren des Hohlraums des formenden Elementes. Die Vorrichtung zur Temperaturregelung des Natriums stellt einen Rohrkondensator (Kühler) dar, der als Rohrschlange ausgebildet ist, welche sich im Hohlraum des formenden Elementes befindet und den grössten Teil dieses Hohlraumes einnimmt (Kondensationszone).

Die Vorrichtung zur Temperaturregelung, das flüssigmetallische Natrium (Wärmeträger) und das Netz aus nichtrostendem Stahl (kapillarporöse Struktur) bilden ein Regelungssystem für den Wärmeaustausch sowohl zwischen der Aussenfläche des formenden Elementes und einer Teilmenge des zu formenden Glases als auch innerhalb des Hohlraums des formenden Elementes durch Transport des Wärmeträgers über die kapillarporöse Struktur aus der Kondensationszone in die Verdampfungszone, dass heisst in die Zone, die mit der Glasschmelze unmittelbar kontaktiert.

Die Einrichtung bietet die Möglichkeit, isotherme Hochtemperaturbedingungen der Formgebung von Glaserzeugnissen zu schaffen und dadurch ihre Qualität zu erhöhen.

Bei der Formgebung von grossen Glaserzeugnissen sowie im Falle, dass eine Formausrüstung mit einem engen Querschnitt für den Durchtritt von Wärmeträgerdämpfen eingesetzt wird, ist das genannte System zur Wärmeaustauschregelung jedoch nicht effektiv genug.

Während der Formgebung von Glaserzeugnissen befindet sich jedes Element der Formausrüstung (besonders der Stempel) unter wärmebelasteten Extremalbedingungen, das heisst ihrer Arbeitsfläche wird von der Glasmasse in kurzen Zeitabständen eine grosse Wärmemenge zugeführt, die zuweilen Hunderte von W/$cm^2$ beträgt. Eine führende Rolle in der Abführung und Umverteilung der Wärme gehört in der bekannten Konstruktion dem korrosions- und hitzefesten porösen Material, dem sogenannten "Docht", über welchen das Natriumkondensat unter der Wirkung des Kapillardrucks aus der Kondensationszone in die Verdampfungszone gelangt. Bekanntlich ist dabei die von der kapillarporösen Struktur in der Zeiteinheit transportierten Flüssigkeitsmenge der Querschnittsgrösse dieser Struktur proportional. Da aber bei der Formgebung von grossen Glaserzeugnissen die Verdampfungszone recht gross ist, wird durch die genannte Anordnung der kapillarporösen Struktur der Zufluss einer ausreichenden Menge flüssigen Natriums in die Verdampfungszone nicht gewährleistet, um die Wärme effektiv abzuführen und umzuverteilen. Infolgedessen kommt es zur Wärmeaustauschkrisis, das heisst zu einem solchen Zustand, bei dem der an der wärmeaufnehmenden Oberfläche anliegende "Docht" austrocknet und die Temperatur dieser Oberfläche steigt, wodurch die Glasmasse an der Arbeitsfläche der Formausrüstung festklebt. Dabei trägt die Ausbildung der Vorrichtung zur Temperaturregelung des Wärmeträgers in Gestalt eines gekrümmten Rohres ebenfalls zum Austrocknen des "Dochtes" bei, weil der Wärmeträger während der Verdampfung zwischen die Spiralen des Kondensators gelangt, an dessen Oberfläche kondensiert und in Form eines Filmes zwischen den Kondensatorwindungen hängenbleibt, was die in die Verdampfungszone gelangende Natriummenge verringert. Ausserdem ist es bei der genannten konstruktiven Ausführung der Vorrichtung zur Temperaturregelung des Wärmeträgers erforderlich, während der Herstellung derselben dünnwandige Röhren unter einem kleinen Radius zu biegen. Dabei ist die Möglichkeit nicht ausgeschlossen, dass in den Wänden der Röhre Mikrorisse entstehen, die während des Betriebs zur Störung ihrer Unversehrtheit und zum Gelangen des Kältemittels in den Hohlraum des formenden Elementes führen können, was wiederum eine Havariesituation der Formausrüstung hervorruft.

In Anbetracht des oben Dargelegten kann man schliessen, dass die Möglichkeiten des genannten Wärmeaustausch-Regelungssystems sehr begrenzt sind. Das System ermöglicht keine wirksame Wärmeabführung von den Arbeitsflächen der Formausrüstung unabhängig von den Abmessungen der Erzeugnisse und des Arbeitstempos der Ausrüstung und kann lediglich für ein enges Sortiment von Erzeugnissen verwendet werden.

Aus der DE-A-2 143 480 ist eine Einrichtung zur Formgebung von Glühlampen bekannt, bei der im Hohlraum jedes formenden Elements eine poröse Masse vorgesehen ist, die eine eine Pressfläche bildende erste Wärmedurchgangswand mit einer zweiten Wärmedurchgangswand verbindet. In dem Hohlraum ist weiterhin eine Wärmetransportmittel vorgesehen, das bei Übergang aus einer Flüssigkeitphase in eine Dampfphase Wärme von der ersten Wärmedurchgangswand aufnimmt und bei Übergang aus der Dampfphase in die Flüssigkeitphase Wärme an die zweite Wärmedurchgangswand abgibt. Aufgrund der porösen Masse kann das kondensierte Wärmetransportmittel mittels Kapillarwirkung zur ersten Wärmedurchgangswand zurückströmen.

Der Erfindung liegt die Aufgabe zugrunde, eine Einrichtung zur Formgebung von Glaserzeugnissen mit einem solchen Regelungssystem für den Wärmeaustausch sowohl zwischen jedem formenden Element und einer Teilmenge des zu formenden Glases als auch im formenden Element selbst zu schaffen, das es erlauben würde, die Wirksamkeit der Wärmeabführung von den formgebenden Oberflächen der formenden Elemente unabhängig von den geometrischen Abmessungen und der Form des zu formenden Erzeugnisses beträchtlich zu erhöhen, was es wiederum ermöglichen würde, die Formungsgeschwindigkeit zu steigern und die Qualität des Fertigerzeugnisses zu verbessern.

Diese Aufgabe wird durch eine Einrichtung zur Formgebung von Glaserzeugnissen gelöst, mit einer Formausrüstung, die mindestens ein formendes Element mit einem hermetisch dichten Hohlraum umfasst, an dessen Innenfläche eine Schicht eines korrosions- und hitzefesten porösen Materials angeordnet ist, mit einem zur intensiven Dampfbildung bei Formungstemperatur fähigen Material, das in dem Hohlraum in einer Menge untergebracht ist, die etwas größer ist als die Menge dieses Materials, die zur Füllung des Hohlraumes mit gesättigten Dämpfen und zur Tränkung der Schicht des korrosions- und hitzefesten porösen Materials erforderlich ist, mit einer Vorrichtung zum Evakuieren des Hohlraumes des formenden Elementes und mit einer mit einer Kältemittelquelle in Verbindung stehenden Vorrichtung zur Temperaturregelung des in dem Hohlraum untergebrachten Materials, wobei der hermetisch dichte Hohlraum des formenden Elementes durch wenigstens eine vertikale Trennwand in Sektionen unterteilt ist, die im Hohlraum des formenden Elementes starr befestigt ist, wenigstens eine Schicht eines korrosions- und hitzefesten porösen Materials umfasst und Sektionen verbindende durchgehende Öffnungen aufweist, und die Vorrichtung zur Temperaturregelung des zur intensiven Dampfbildung bei der Formungstemperatur fähigen Materials von einer im oberen Teil des formenden Elementes ausgebildeten Kammer gebildet wird.

Die Arbeit der erfindungsgemässen Einrichtung beruht auf dem Prizip von Verdampfungs- und Kondensationssystemen, welches in der Wärmeübertragung von den stärker wärmebelasteten Abschnitten zu den weniger wärmebelasteten Abschnitten durch Verdampfung des Wärmeträgers im ersten Abschnitt, Kondensation seiner Dämpfe im zweiten Abschnitt und Rückführung des Wärmeträgers in flüssigem Zustand in den ersten Abschnitt besteht. Dabei gehört die führende Rolle in der wirksamen Arbeit der Einrichtung dem korrosions- und hitzefesten porösen Material, das einen schnellen Transport des Wärmeträgers von einem weniger wärmebelasteten Abschnitt (von der Kondensationszone) zu einem stärker wärmebelasteten Abschnitt (zur Verdampfungszone) gewährleistet und an der Innenfläche des formenden Elementes einen dünnen Wärmeträgerfilm erzeugt. Dadurch, dass im Hohlraum des formenden Elementes mindestens eine aus einem korrosions- und hitzefesten porösen Material bestehende vertikale Trennwand vorhanden ist, wird es möglich, in diesem Hohlraum ein verzweigtes kapillarporöses System zu schaffen, das die Kondensations- und die Verdampfungszone auf dem kürzesten Wege verbindet und einen effektiven Transport des Wärmeträgers aus der Kondensationszone in die Verdampfungszone sicherstellt.

Durch das Vorhandensein der die Sektionen miteinander verbindenden durchgehenden Öffnungen können die gesättigten Dämpfe des zur intensiven Dampfbildung bei der Formungstemperatur fähigen Materials während des Formgebungsvorgangs aus einer Sektion in die andere überströmen, wodurch gleiche Drücke der gesättigten Dampfe und gleiche Bedingungen zur Wärmeaustauschregelung in jeder von ihnen geschaffen werden.

Die Ausbildung der Vorrichtung zur Temperaturregelung in Form einer im oberen Teil des formenden Elementes gebildeten Kammer gewährleistet, dass die Kondensationszone oberhalb der Verdampfungszone geschaffen wird. Infolgedessen wird der Kapillardruck der Flüssigkeit mit dem Gravitationsdruck summiert, was die Wirksamkeit des Wärmeaustausch-Regelungssystems erhöht.

Somit bietet das vorstehend beschriebene Regelungssystem für den Wärmeaustausch sowohl zwischen den formenden Elementen und einer Teilmenge des zu formenden Glases als auch im formenden Element selbst die Möglichkeit, die Wirksamkeit der Wärmeabführung von den formgebenden Oberflächen der Formausrüstung unabhängig von den geometrischen Abmessungen und der Gestalt des zu formenden Erzeugnisses beträchtlich zu erhöhen, was wiederum die Formungsgeschwindigkeit zu steigern und die Qualität des Fertigerzeugnisses zu verbessern gestattet.

Es ist erwünscht, dass mindestens eine vertikale Trennwand den Hohlraum des formenden Elementes in im wesentlichen gleich große Sektionen unterteilt, um in jeder von ihnen adäquate Bedingungen zu schaffen.

Bei der Unterteilung des hermetisch dichten Hohlraumes des formenden Elementes in Sektionen mittels mindestens zweier vertikaler Trennwände ist es zweckmässig, in diesem Hohlraum zumindest eine Tragstütze vertikal aufzustellen und starr zu befestigen, an deren Aussenfläche mindestens eine Schicht eines korrosions- und hitzefesten porösen Materials angeordnet ist, wobei jede vertikale Trennwand mit ihrem einen Ende und dieser Tragstütze starr befestigt ist.

Die Tragstütze erfüllt zwei Funktionen, von denen eine in der Gewährleistung der mechanischen Festigkeit der Konstruktion und die andere in der Schaffung eines zusätzlichen Systems für den Transport des Wärmeträgers zu dem heissesten Abschnitt der Verdampfungszone besteht. Die Verbindung der vertikalen Trennwände mit der Tragstütze erlaubt es, eine kapillarporöse Struktur aus dem korrosions- und hitzefesten porösen Material zu schaffen, welche die "heissesten" Abschnitte der Verdampfungszone mit der Kondensationszone auf dem kürzesten Wege verbinden. Dies ermöglicht eine Erhöhung der Umlaufgeschwindigkeit des zur intensiven Dampfbildung fähigen Materials und garantiert die Vermeidung einer Überhitzung der Arbeitsflächen der Formausrüstung.

Es ist zweckmässig, dass in jeder Sektion an der Innenfläche des formenden Elementes unter der Schicht eines korrosions- und hitzefesten porösen Materials senkrechte Nuten eingearbeitet sind, deren Tiefe jeweils das 1,0 bis 3,0 -fache ihrer Breite beträgt, während der Abstand zwischen den Nuten im wesentlichen der Nutbreite entspricht. Die Nuten bilden zusätzliche Adern für den Transport des zur intensiven Dampfbildung fähigen Materials. Diese Adern weisen einen bei weitem kleineren Widerstand für die durchströmende Flüssigkeit als das korrosions- und hitzefeste poröse Material auf und erlauben es, einen höheren Kapillardruck zu entwickeln. Dadurch werden die Transportmöglichkeiten dieser kapillarporösen Struktur wesentlich erweitert und folglich wird die Wirksamkeit des Systems der Wärmeabführung von den Arbeitsflächen des formenden Elementes erhöht. Durch den Einsatz eines derartigen Wärmeabführungssystems (des Kühlsystems) der Arbeitsflächen der Formausrüstung wird es möglich, teilweise oder vollständig auf die Verwendung von herkömmlichen bekannten und zugleich sperrigen, energieintensiven und stark rauschenden Luftkühlungssystemen zu verzichten. Die Nuten werden in der Regel rechteckig hergestellt, man kann sie aber auch trapezförmig und dreieckig ausbilden.

Es ist günstig, an der Aussenfläche der Tragstütze unter der Schicht eines korrosions- und hitzefesten porösen Materials senkrechte Nuten einzuarbeiten, deren Tiefe jeweils des 1,0 bis 3,0 -Fache ihrer Breite beträgt, während der Abstand zwischen den Nuten im wesentlichen der Nutbreite entspricht. Durch das Vorhandensein solcher Nuten wird der hydraulische Widerstand für die durchströmende Flüssigkeit erheblich vermindert, der Kapillardruck gesteigert und somit die Wirksamkeit des Systems des Transportes des zur intensiven Dampfbildung fähigen Materials (des Wärmeträgers) erhöht. Die senkrechte Anordnung der Nuten gewährleistet den kürzesten Transportweg der Flüssigkeit aus der Kondensationszone in die Verdampfungszone.

Es ist erwünscht, dass die Kammer der Vorrichtung zur Temperaturregelung im oberen Teil des Hohlraumes des formenden Elements von einer Quertrennwand gebildet wird, die mit ihren Umfang an der Oberfläche des formenden Elementes starr befestigt ist.

Diese Ganzmetall-Trennwand ist eine steife und feste Konstruktion, die imstande ist, hohe thermomechanische Spannungen auszuhalten, und ihre Befestigung an der Peripherie des formenden Elementes erlaubt es, das Vorhandensein von Schweissverbindungen in der Zone der Einwirkung von hohen Temperaturen und Flüssigmetalldämpfen zu eliminieren. In diesem Fall werden die Zuverlässigkeit und die Betriebssicherheit des formenden Elementes erhöht. Darüber hinaus können dadurch adäquate Bedingungen für Kühlung, Kondensation und Druck von Wärmeträgerdämpfen in jeder Sektion des formenden Elementes geschaffen werden, weil auf jede Sektion eine gleiche Fläche der Quertrennwand entfällt.

Zur Steigerung der Wirksamkeit der Wärmeabführung von dem formgebenden Element ist es günstig, dass die Quertrennwand als gekrümmte Platte ausgebildet ist, die in ihrem Zentralteil nach der Seite des hermetisch dichten Hohlraumes des formenden Elements hin ragt.

Es ist zweckmässig, dass die Kammer der Vorrichtung zur Temperaturregelung von einer ringförmigen geschlossenen Sektion gebildet wird, die sich im oberen Teil der Wand des formenden Elementes befindet.

Die Anordnung der Temperaturregelungs-Kammer im oberen Teil der Wand des formenden Elementes gestattet es, das Volumen seines hermetisch dichten Hohlraumes, der während der Arbeit mit Wärmeträgerdämpfen gefüllt ist, wesentlich zu vergrössern, was eine Erweiterung des Bereichs der Druckregelung der gesättigten Dämpfe und folglich des Bereichs der Temperaturregelung der Arbeitsflächen möglich macht. Diese Tatsache ist wichtig, da eine Erhöhung der Temperatur der Arbeitsflächen des formenden Elementes, beispielsweise der Matrize, die Hämmerung (Welligkeit) an der Oberfläche von zu formenden Erzeugnissen völlig auszuschliessen gestattet, was die Gebrauchsgestalt von Erzeugnissen beträchtlich verbessert, während eine Senkung der Temperatur der Arbeitsflächen der Formausrüstung die Betriebsdauer oder das Arbeitstempo derselben zu erhöhen erlaubt. Von besonderer Aktualität ist dies bei formenden Elementen, die eine schmale und lange Form haben, beispielsweise bei Stempeln, die zur Formgebung von Flaschen, Trinkgläsern, Parfümerzeugnissen u.a. bestimmt sind und bei denen das Volumen des hermetisch dichten Hohlraumes gering ist.

Somit bietet die erfindungsgemässe Einrichtung zur Formgebung von Glaserzeugnissen die Möglichkeit:

- die Wirksamkeit der Wärmeabführung von den Arbeitsflächen (formgebenden Oberflächen) der Formausrüstung wesentlich zu steigern;
- das Arbeitstempo (die Leistung) der Formausrüstung zu erhöhen;
- auf (geräuschvolle) Systeme der Zwangsluftkühlung der Formausrüstung zu verzichten und damit die Arbeitsbedingungen des Wartungspersonals zu verbessern;

- die Zuverlässigkeit und Nutzungsdauer der Formausrüstung zu erhöhen;

- das handelsübliche Aussehen der Erzeugnisse durch vollständige Eliminierung der Hämmerung (Welligkeit) an der Oberfläche derselben zu verbessern.

Kurze Beschreibung der Zeichnungen

Zum besseren Verständnis der Erfindung werden nachstehend konkrete Ausführungsbeispiele derselben mit Bezugnahmen auf beigefügte Zeichnungen angeführt, in denen es zeigt:

Fig.1 einen erfindungsgemässen Stempel im Längsschnitt;
Fig.2 einen Querschnitt nach Linie II - II der Fig.1 mit einem Ausbruch;
Fig.3 eine erfindungsgemasse Matrize im Längsschnitt;
Fig.4 einen Querschnitt nach Linie IV - IV der Fig. 3, mit einem Ausbruch;
Fig.5 einen erfindungsgemässen Stempel in einer weiteren Ausführungsform, im Längsschnitt;
Fig.6 dasselbe wie in Fig.5 im Querschnitt mit einem Ausbruch.

Bestes Verfahren zur Durchführung der Erfindung

Die erfindungsgemässe Einrichtung zur Formgebung von Glaserzeugnissen enthält eine Formausrüstung, die mindestens ein formendes Element mit einem hermetisch dichten Hohlraum umfasst.

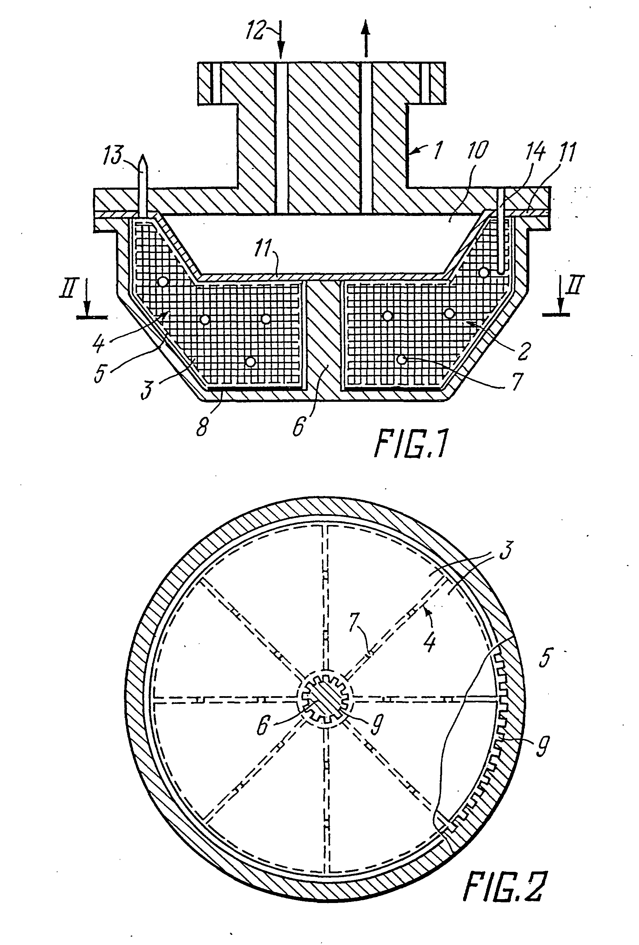

Zum leichteren Verstehen des Wesens der Erfindung wird hier ein Beispiel behandelt, in welchem ein Stempel 1 (Fig.1) hohl ausgebildet ist.

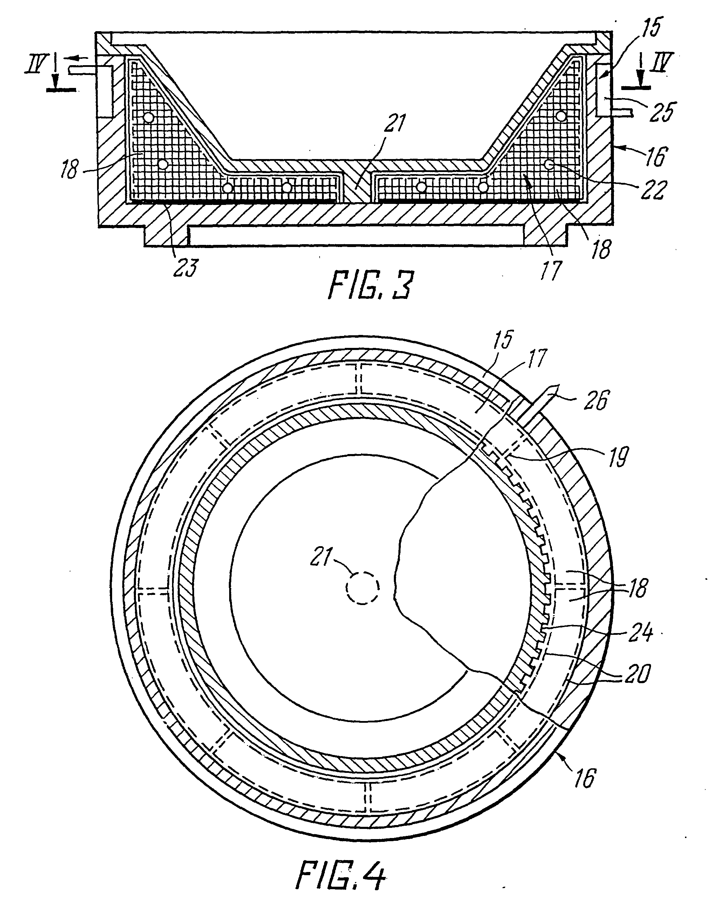

Der in Fig.1 dargestellte Stempel 1 ist zur Formgebung von Kochgeschirr aus temperaturwechselbeständigem Glas bestimmt und weist einen hermetisch dichten Hohlraum 2 auf. Der Hohlraum 2 des Stempels 1 ist in so gut wie gleiche Sektionen 3 mittels vertikaler Trennwände 4 (Fig.2) unterteilt, die im Inneren des Hohlraumes 2 (Fig.1) des Stempels 1 starr befestigt sind und aus einem korrosions- und hitzefesten porösen Material bestehen. Eine Schicht eines ebensolchen Materials ist an der Innenflache im Hohlraum 2 des Stempels 1 starr befestigt. Als korrosions- und hitzefestes poröses Material kann ein feinmaschiges geflochtenes Netz 5 aus nichtrostendem Stahl verwendet werden. Die Schicht des Netzes 5 ist an der Innenfläche des Stempels 1 mittels Punktschweissung befestigt, was eine hinreichende Starrheit der Befestigung gewährleistet, aber es sind auch andere bekannte Befestigungsarten möglich.

Die vertikalen Trennwände 4 (Fig.2) sind mit ihrem einen Ende mittels Punktschweissung an einer Tragstütze 6 befestigt und weisen durchgehende Öffnungen 7 auf. Die Tragstütze 6 ist senkrecht aufgestellt und im hermetisch dichten Hohlraum 2 des Stempels 1 starr befestigt.

Die Form der Tragstütze 6 kann zylindrisch, rechteckig, konisch oder andersartig je nach der Konfiguration des formenden Elementes sein. Die Anzahl der Tragstützen 6 hängt von den Aussenabmessungen der Formausrüstung ab.

Je nach der Geometrie des formenden Elementes und der Wärmebelastung, die von diesem während der Arbeit aufgenommen wird, können eine, zwei, drei und so weiter vertikale Trennwände 4 vorgesehen sein (in der Figur 2 gibt es acht solche Trennwände). Sie können ebenso wie das Netz 5 an der Innenfläche des Stempels 1 aus einem korrosions- und hitzefesten porösen Material in zwei und mehr Schichten bestehen. Zwecks Erzeugung der Steifigkeit wird dabei jede nachfolgende Schicht des Netzes 5 an der vorhergehenden durch Punktschweissung befestigt. Eine starre und dichte Befestigung des Netzes 5 ist die unerlässliche Bedingung der Einrichtungsarbeit. Die Anzahl der Trennwände 4 und die Anzahl der Schichten des Netzes 5, aus denen sie bestehen, hängen von den Formungsbedingungen (dem Arbeitstempo, der Temperatur der Glasmasse), den geometrischen Abmessungen der Erzeugnisse ab. Letzten Endes sind sie von dem auf eine Einheit der Arbeitsfläche des formenden Elementes entfallenden spezifischen Wärmestrom abhängig, welchen das Wärmeaustausch-Regelungssystem umverteilen soll. Wenn in dem Hohlraum 2 des Stempels 1 nur eine vertikale Trennwand 4 untergebracht ist, braucht die Tragstütze 6 in diesem Hohlraum 2 nicht aufgestellt zu werden. In diesem Fall wird die Trennwand 4 mit jedem ihren Ende an der Innenfläche des Stempels 1 befestigt.

Während der Arbeit des formenden Elementes füllt der Wärmeträger ständig die Poren der kapillarporösen Struktur aus und erzeugt damit auf ihr eine dünne Metallfilmschicht, durch welche die gesättigten Wärmeträgerdämpfe nicht dringen können. Zum Überströmen der Dämpfe eines zur intensiven Dampfbildung bei der Formungstemperatur fähigen Materials 8 (Fig.1) (beispielsweise einer eutektischen Natrium-Kalium-Legierung) aus einer Sektion 3 (Fig.2) in die andere und zum Erzeugen gleicher Drücke von gesättigten Dämpfen in den Sektionen 3 weisen die vertikalen Trennwände 4 die durchgehenden Öffnungen 7 auf, welche die Sektionen 3 miteinander verbinden. Somit werden die im wesentlichen gleichen Sektionen 3 adäquate Bedingungen in bezug auf hydraulische und Wärmeparameter haben. Die durchgehenden Öffnungen 7 können mit einer beliebigen Konfiguration (rund, quadratisch, dreieckig u. a.) und mit unterschiedlichen geometrischen Abmessungen für verschiedene formende Elemente ausgeführt sein. Jedoch ist es für jedes konkrete formende Element erwünscht, dass die Anzahl der durchgehenden Öffnungen 7, die Konfiguration der Öffnungen 7 und deren Abmessungen in jeder vertikalen Trennwand 4 gleich sind. Die durchgehenden Öffnungen 7 in den vertikalen Trennwänden 4 sind zweckmässigerweise gleichmässig bezüglich der Fläche der Trennwand 4 anzuordnen, und ihre Anzahl soll für eine schnelle Überströmung der Wärmeträgerdämpfe von Sektion 3 zu Sektion 3 ausreichend sein.

Der Stempel 1 weist in jeder seiner Sektion 3 (Fig.2) an der Innenfläche unter der Schicht eines korrosions- und hitzefesten porösen Materials Nuten 9 auf, bei jeder von denen ihre Tiefe 1,0 bis 3,0 ihrer Breite beträgt, während der Abstand zwischen jeder von ihnen im wesentlichen ihrer Breite gleich ist. Die Nuten 9 bilden gemeinsam mit der Schicht des Netzes 5 mechanisch stabile Kanäle, die zu einem intensiveren Wärmeträgerumlauf beitragen und es erlauben, die Wirksamkeit der Wärmeabführung von der Arbeitsfläche des Stempels 1 beträchtlich zu steigern. Experimentell wurde festgestellt, dass die geometrischen Abmessungen der Nuten 9 bei deren Herstellung und Anordnung an der Innenfläche des Stempels 1 am rationellsten sind, wenn die Tiefe einer jeden von ihnen 1,0 bis 3,0 ihrer Breite beträgt, während der Abstand zwischen jeder von ihnen ihrer Breite gleich ist. Dadurch kann die Bildung von Luftblasen in den Kanälen, welche den Transport des Wärmeträgers über die Kanäle behindern, praktisch vollständig ausgeschlossen werden. Die Nuten 9 werden an der Innenfläche des Stempels 1 senkrecht (entlang seiner Achse), das heisst auf dem kürzesten Wege zwischen der Verdampfungs- und der Kondesationszone, eingearbeitet. In der Regel werden sie rechteckig hergestellt, können aber auch trapezförmig oder oval sein. Die Herstellung der Nuten 9 kann mit einem in der Matallbearbeitung bekannten Werkzeug nach bekannten Methoden (Räumen, Fräsen u.a.) erfolgen. Falls die Nuten 9 mit einer Tiefe grösser als das Dreifache ihrer Breite hergestellt werden, nimmt wesentlich die Wahrscheinlichkeit zu, dass in ihnen Gasblasen bei der Verdampfung des Wärmeträgers entstehen und die Kanäle der Nuten 9 für die durchströmende Flüssigkeit gesperrt werden. Werden die Nuten 9 so hergestellt, dass ihre Breite grösser als ihre Tiefe ist, erweist sich der Kapillardruck bei einem hohen Arbeitstempo der Formausrüstung als unzureichend für den Wärmeträgertransport aus der Kondensationszone in die Verdampungszone, was zum Festkleben des Glases an der Oberfläche des formenden Elementes führen wird.

Wie im vorstehenden erwähnt, ist im Hohlraum 2 des Stempels 1 (Fig.1) eine Tragstütze 6 vertikal aufgestellt und starr befestigt, die der Konstruktion eine höhere Festigkeit gibt. An der Aussenfläche der Tragstütze 6 ist mittels Punktschweissung eine Schicht eines korrosions- und hitzefesten porösen Materials, z.B. das Netz 5, befestigt. Wie vorstehend angegeben, werden dabei an der Tragstütze 6 die vertikalen Trennwände 4 (Fig.2) befestigt. An der Aussenfläche der Tragstütze 6 sind unter der Schicht eines korrosions- und hitzefesten porösen Materials Nuten 9 eingearbeitet, bei jeder von ihnen ihre Tiefe 1,0 bis 3,0 ihrer Breite beträgt, während der Abstand zwischen ihnen im wesentlichen der Nutbreite gleich ist. Die Zweckbestimmung der Nuten 9 und der Schicht des Netzes 5 wurde bereits oben beschrieben. Die Anzahl der Tragstützen 6 und deren Konfiguration sind von der Konfiguration des formenden Elementes und seinen Abmessungen abhängig. Es ist ratsam, die Tragstütze 6 gemeinsam mit dem Stempel 1 aus ein und demselben Metallrohling herzustellen, was eine hohe Festigkeit der Konstruktion sicherstellt.

Zur Regelung des Wärmeaustauschprozesses, im besonderen des Prozesses der Kondensation der Wärmeträgerdämpfe in den Sektionen 3 des hermetisch dichten Hohlraumes 2 (Fig.1) des Stempels 1, und der Temperatur an dessen Arbeitsflächen ist eine Vorrichtung zur Temperaturregelung vorgesehen. Dabei ist die Vorrichtung zur Temperaturregelung in Form einer im oberen Teil des Stempels 1 gebildeten Kammer 10 ausgeführt.

Bekanntlich sind die Wärmeträgerdämpfe, die sich im gesättigten Zustand befinden, der Gleichung des Zustandes eines idealen Gases untergeordnet:

$$PV = \frac{m}{\mu} \cdot R \cdot T \qquad (I),$$

worin bedeuten:

P - Druck der gesättigten Wärmeträgerdämpfe (Pa);
V - Volumen des Hohlraumes des formenden Elementes ($m^3$);
m - Masse der gesättigten Dämpfe (kg);
μ - relative Molekülmasse des Wärmeträgers (kg/mol);
R - universelle Gaskonstante (J/kmol·grd);
T - Temperatur (°K).

Aus der Formel (I) ist ersichtlich, dass die Grössen V, m, μ und R in diesem Fall konstant sind, d. h., die Temperatur ist dem Druck der gesättigten Dämpfe proportional. Durch Erhöhung oder Verminderung des Drucks der gesättigten Dämpfe in den Sektionen 3 des hermetisch dichten Hohlraumes 2 des Stempels 1 kann man auch die Temperatur innerhalb desselben und folglich auch an seinen formgebenden Oberflächen ändern. Der Druck der gesättigten Dämpfe lässt sich wiederum durch Änderung der Menge des der Temperaturregelungs-Kammer 10 zugeführten Kältemittels regeln. Beispielsweise wird durch Zuführung einer grösseren Kältemittelmenge in die Temperaturregelungs-Kammer 10 die Temperatur innerhalb derselben gesenkt. Dies ruft eine erhöhte Kondensation der gesättigten Wärmeträgerdämpfe innerhalb der Sektionen 3 des hermetisch dichten Hohlraumes 2 des Stempels 1 hervor. Dabei nimmt der Druck der gesättigten Dampfe in ihnen ab. Dementsprechend sinkt auch die Temperatur innerhalb der Sektionen 3 des Hohlraumes 2 und folglich an den formgebenden Oberflächen des Stempels 1. Und umgekehrt führt eine Verringerung der Menge des der Temperaturregelungs-Kammer 10 zugeführten Kältemittels zur Steigerung der Temperatur in derselben. Infolgedessen verlangsamt sich der Kondensationsprozess der gesättigten Dämpfe innerhalb der Sektionen 3 des hermetisch dichten Hohlraumes 2 des Stempels 1 und es findet eine Druckzunahme und folglich ein Temperaturanstieg im Inneren des Hohlraumes 2 und an den formgebenden Oberflächen des formenden Elementes statt.

Ausserdem hängt der Kapillardruck der Flüssigkeit in porösen Gefügen von Gravitationskräften ab. Der Gravitationsdruck wird mit dem Kapillardruck summiert, wenn die Kondensationszone oberhalb der Verdampfungszone liegt. Die Oberfläche der Temperaturregelungs-Kammer 10, die dem Inneren des Hohlraumes 2 des formenden Elementes zugewandt ist, stellt die Kondensationszone dar. Um daher den Kapillardruck durch dessen Summierung mit dem Gravitationsdruck zu erhöhen, das heisst die Wirksamkeit des Wärmeaustausch-Regelungssystems zu steigern, ist es erforderlich, die Temperaturregelungs-Kammer 10 über der Verdampfungszone anzuordnen.

Die Temperaturregelungs-Kammer 10 im oberen Teil des Stempels 1 ist mittels einer Quertrennwand 11 gebildet, die mit ihrer Peripherie am formenden Element über dem hermetisch dichten Hohlraum 2 desselben starr befestigt ist. Der Temperaturregelungs-Kammer 10 wird ein Kältemittel 12 zugeführt, als welches Wasser, Luft oder Wasser-Luft-Gemisch verwendet werden kann. Die Quertrennwand 11 ist als dünne gekrümmte Metallplatte ausgebildet, die mit ihrem Zentralteil in Richtung des hermetisch dichten Hohlraumes des Stempels 1 ragt. An der Peripherie des formenden Elementes ist die Platte mit Hilfe z.B. der Argonarc-Schweissung befestigt. Sie kann in Form eines Kegelstumpfs, eines Zylinders ausgebildet sein. Zwecks Steigerung der Wirksamkeit der Wärmeentnahme kann die dem Inneren der Temperaturregelungs-Kammer 10 zugewandte Oberfläche der Platte verrippt sein.

Im Gehäuse des Stempels 1 ist ein Stutzen 13 eingebaut, der mit einer Vorrichtung zum Evakuieren des Hohlraumes 2 desselben in Verbindung steht. Als Evakuiervorrichtung können bekannte Aggregate eingesetzt werden; deshalb ist die Vorrichtung in der Zeichnung nicht gezeigt.

Der Strutzen 13 erfüllt auch eine andere Funktion. Über ihn wird den Hohlraum 2 des Stempels 1 das zur intensiven Dampfbildung bei der Formungstemperatur fähige Material 8 zugeführt. Als solches Material verwendet man Alkalimetalle wie Natrium, Kalium, Zäsium u.a. oder eine Natrium-Kalium-Legierung in einer Menge, die eine zur Füllung des Hohlraumes 2 mit ihren Dämpfen und zur Tränkung mit ihr der kapillarporösen Struktur erforderliche Menge etwas übersteigt.

Im Gehäuse des Stempels 1 ist ein Thermoelement 14 zur Messung der Temperatur der Arbeitsfläche während der Formgebung von Erzeugnissen installiert.

Alles in bezug auf den Stempel Gesagte bezieht sich in gleichem Masse auf die Matrize und den Formenring, wenn sie hohl ausgebildet sind.

Zu gleicher Zeit ist es zweckmässig, die Temperaturregelungs-Kammer 15 (Fig.3) einer Matrize 16 in Form einer ringförmigen geschlossenen Sektion auszubilden, die sich im oberen Teil der Wand des formenden Elementes befindet, wie dies in Fig.3 gezeigt ist. Mit Ausnahme der Temperaturregelungs-Kammer 15 ist die Konstruktion der Matrize 16 ähnlich der Konstruktion des in den Figuren 1 und 2 dargestellten Stempels 1. Die Matrize 16 (Fig.3) weist einen hermetisch dichten Hohlraum 17 auf, der in so gut wie gleiche Sektionen 18 (Fig.4) mittels vertikaler Trennwände 19 unterteilt ist, welche innerhalb des Hohlraumes 17 starr befestigt sind und aus einem feinmaschigen nichtrostenden Metallnetz 20 bestehen. Eine Schicht eines ebensolchen Netzes 20 ist durch Punktschweissung an der Innenfläche der Matrize 16 in deren Hohlraum 17 befestigt. Die vertikalen Trennwände 19 sind mit Hilfe der Punktschweissung mit dem einen Ende an der Innenfläche im Hohlraum 17 der Matrize 16 und mit dem anderen an einer Tragstütze 21 befestigt.

Die vertikalen Trennwände 19 weisen durchgehende Öffnungen 22 (Fig.3) auf, die die Sektionen 18 miteinander verbinden und zum Überströmen von Dämpfen eines Wärmeträgers 23, beispielsweise einer eutektischen Natrium-Kalium-Legierung, erforderlich sind. Die Matrize 16 (Fig.4) besitzt in ihrer jeden Sektion 18 an der Innenfläche unter der Schicht des Metallnetzes 20 senkrechte Nuten 24, bei jeder von denen ihre Tiefe 1,0 bis 3,0 ihrer Breite beträgt, während der Abstand zwischen ihnen im wesentlichen der Nutbreite gleich ist. Ebensolche senkrechte Nuten 24 sind auch an der Tragstütze 21 unter der Schicht des Netzes 20 eingearbeitet. Im oberen Teil der Wand der Matrize 16 (Fig.3) ist die Kammer 15 gebildet, die eine ringsförmige geschlossene Sektion 25 darstellt, in die ein Kältemittel, beispielsweise Luft, eingeleitet wird. Im Gehäuse der Matrize 16 (Fig.4) ist ein Stutzen 26 eingebaut, der zum Evakuieren des Hohlraumes 17 und zum Füllen desselben mit dem Wärmeträger erforderlich ist.

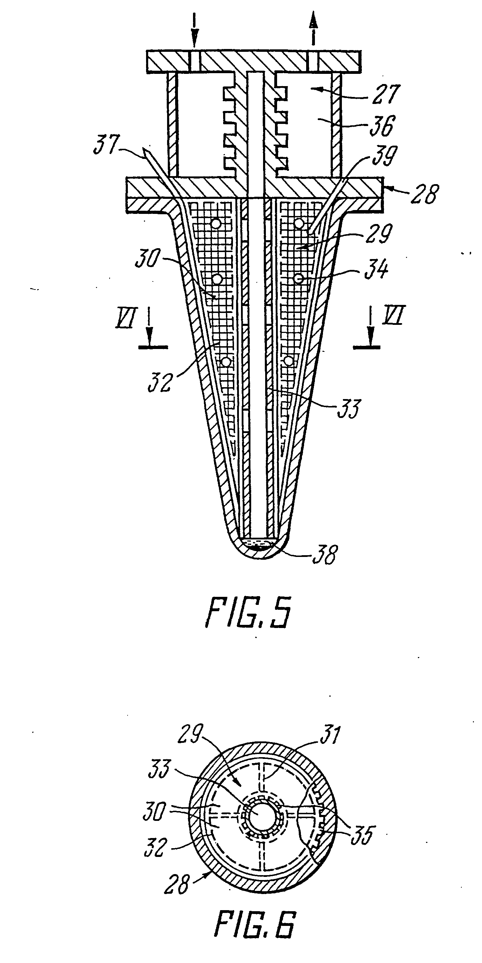

Ähnlich ist eine Temperaturregelungs-Kammer 27 (Fig.5) und die Konstruktion eines Stempels 28 ausgebildet. Dieser besitzt einen hermetisch dichten Hohlraum 29, der in so gut wie gleiche Sektionen 30 mittels vertikaler Trennwände 31 (Fig.6) unterteilt ist. Die Trennwände 31 sind beispielsweise mit Hilfe der Punktschweissung mit dem einen Ende an der mit einem Metallnetz 32 bedeckten Innenfläche im Hohlraum 29 des Stempels 28 und mit dem anderen Ende an einer Tragstütze 33 starr befestigt. Die vertikalen Trennwände 31 bestehen aus einem ebensolchen Netz 32 und weisen durchgehende Öffnungen 34 (Fig.5) auf, welche die Sektionen 30 miteinander verbinden. An der Innenfläche im Hohlraum 29 des Stempels 28 und an der Tragstütze 33 sind senkrechte Nuten 35 (Fig.6) eingearbeitet, bei jeder von denen ihre Tiefe 1,0 bis 3,0 ihrer Breite beträgt, während der Abstand zwischen ihnen im wesentlichen der Nutbreite gleich ist. Im oberen Teil der Wand des Stempels 28 (Fig.5) ist die Temperaturregelungs-Kammer 27 ausgeführt, die eine ringförmige geschlossene Sektion 36 darstellt, der ein Kältemittel zugeführt wird. Im Gehäuse des Stempels 28 ist ein Stutzen 37 vorhanden, der zum Evakuieren des Hohlraumes 29 und zum Zuführen in diesen eines zur intensiven Dampfbildung bei der Formungstemperatur fähigen Materials, z.B. des Natriums, bestimmt ist. Zum Erfassen der Dampftemperatur innerhalb des Hohlraumes 29 des Stempels 28 ist im Hohlraum 29 ein Temperaturfühler 39 installiert.

Zum leichteren Verstehen der Arbeitsweise der Einrichtung zur Formgebung von Glaserzeugnissen wird hier ein Beispiel für die Arbeit der in den Figuren 1 und 2 dargestellten Einrichtung behandelt.

Die Einrichtung zur Formgebung von Glaserzeugnissen arbeitet folgenderweise.

An der Innenfläche des Stempels 1 und der Aussenfläche der Tragstütze 6, die in eins mit dem Stempel 1 ausgeführt ist, werden die Nuten 9 beispielsweise durch Fräsen eingearbeitet. Die Tiefe jeder von ihnen beträgt 1,0 bis 3,0 ihrer Breite, während der Abstand zwischen den Nuten der Nutbreite gleich ist. Danach wird an diesen Oberflächen durch Punktschweissung ein korrosions- und hitzefestes poröses Material in Form von zwei Schichten des feinmaschigen Netzes 5 aus nichtrostendem Stahl befestigt. Aus demselben Material werden die zweischichtigen vertikalen Trennwände 4 hergestellt, in ihnen die durchgehenden Öffnungen 7 gemacht und danach die Trennwände 4 im Hohlraum 2 des Stempels 1 aufeinanderfolgend montiert. Durch Punktschweissung wird das eine Ende der Trennwand 4 an der Innenfläche des Stempels 1 und das andere an der Tragstütze 6 starr befestigt. Hierbei werden die Trennwände 4 so angeordnet, dass sie im wesentlichen einander gleiche Sektionen 3 bilden.

Des weiteren wird aus einer dünnen, aber hinreichend festen Metallplatte die kegelstumpfförmige Quertrennwand 11 hergestellt und diese mit ihrem vorspringenden Zentralteil in Richtung des hermetisch dichten Hohlraumes 2 des Stempels 1 eingesetzt. An ihrer Peripherie wird die Quertrennwand 11 beispielsweise durch Argonarc-Schweissung an das formende Element angeschweisst.

Dann wird über den Stutzen 13 mit Hilfe z.B. einer Vakuumpumpe der Hohlraum 2 evakuiert, worauf über denselben Stutzen 13 dem hermetisch dichten Hohlraum 2 des Stempels 1 eine eutektische Kalium-Natrium-Legierung in einer Menge zugeführt wird, die aus der Beziehung (1,03 - 1,07) $\rho\delta s$ bestimmt wird, worin $\rho$ die Dichte des Wärmeträgers, $\delta$ die Stärke der Schicht des korrosions- und hitzefesten porösen Materials und s der Flächeninhalt der genannten Schicht sind. Diese Menge der Legierung übersteigt um 3 bis 7% eine Menge, die zur Füllung des Hohlraumes 2 mit ihren Dämpfen und zur Tränkung mit ihr der Nuten 9 und des Metallnetzes 5 erforderlich ist, mit dem die Innenfläche des Stempels 1 und die Aussenfläche der Tragstütze 6 bedeckt ist und aus dem die radialen Trennwände 4 bestehen. Danach wird der obere Teil des Stutzens 13 hermetisch verschlossen.

Dann wird der Stempel 1 an einer Presse montiert. Der Temperaturregelungs-Kammer 10 des Stempels 1 wird das Kältemittel 12 zugeführt. Daraufhin wird mit der Formgebung der Glasmasse begonnen.

Der von der Glasmasse ausgehende Wärmestrom überträgt nach Passieren der Wand des Stempels 1 seine Energie zur eutektischen Kalium-Natrium-Legierung (zum Material 8). Diese Legierung beginnt, intensiv zu verdampfen und die Poren des korrosions- und hitzefesten porösen Materials (des Netzes 5) und die Nuten 9 zu füllen. Die Dämpfe der Legierung füllen die Sektionen 3 des hermetisch dichten Hohlraumes 2 aus, wobei der Druck der Dämpfe der Metallegierung in jeder Sektion 3 wegen der in den Trennwänden 4 vorhandenen durchgehenden Öffnungen 7 gleich sein wird.

Des weiteren kondensiert ein Teil der Dämpfe an der verhältnismässig kalten Oberfläche der Quertrennwand 11 der Temperaturregelungs-Kammer 10. Dabei füllt das Kondensat die Poren des oberen Teils der Trennwände 4 und der Schichten des Netzes 5 sowie den oberen Teil der Nuten 9 aus. Der obere Teil der kapillarporösen Struktur erweist sich also als durch das Kondensat gleichsam "überluftet", während der untere Teil sich umgekehrt als "trockengelegt" zeigt. Dementsprechend wird der Flüssigkeitsdruck in jeder Pore eines mit Flüssigkeit angereicherten Abschnittes durch den stärker konvexen Meniskus höher sein als der Druck in einer ebensolchen Pore eines an Flüssigkeit verarmten Abschnittes durch den stärker konkaven Meniskus. Diese Druckdifferenz ruft entsprechend dem Laplaceschen Gesetz einen Kapillardruck der Flüssigkeit aus der Kondensationszone in die Verdampfungszone hervor. Unter Einwirkung dieses Drucks strömt die Flüssigkeit über die radialen Trennwände 4, die Nuten 9 und das an der Innenfläche des formenden Elementes befestigte Netz 5 in die Verdampfungszone. Nach Einströmen in die Verdampfungszone verwandelt sich das flüssige Material 8 wieder in Dampf, und der Zyklus wiederholt sich.

Hierbei wird der Verdampfungsvorgang von einer Wärmeentnahme von der Arbeitsfläche des formenden Elementes begleitet, deren Grösse der Menge der verdampften Flüssigkeit und der latenten Verdampfungswärme derselben direkt proportional sein wird.

Der Prozess der Temperaturregelung an den Arbeitsflächen des formenden Elementes kommt folgendermassen zustande.

Bei einem Temperaturanstieg an den Arbeitsflächen wird der Prozess der Verdampfung des Materials 8 intensiviert. Dabei nimmt der Druck der gesättigten Dämpfe im hermetisch dichten Hohlraum 2 und folglich auch die Temperatur im Inneren desselben zu. Das Thermoelement 14 überträgt, nachdem es diese Temperatur erfasst hat, ein Signal auf einen Sekundärstellmechanismus (dieser ist in Fig.1 nicht angegeben, weil für diesen Zweck beliebige bekannte Stellmechanismen verwendet werden können), welcher die Zuführung des Kältemittels 12 in die Temperaturregelungs-Kammer 10 vergrössert. Dabei kühlt sich die Quertrennwand 11 ab, was eine Intensivierung der Kondensation der Dämpfe des Materials 8 bewirkt. Der Druck der gesättigten Dämpfe dieses Materials 8 im Hohlraum 2 nimmt ab, die Temperatur im Inneren desselben sinkt und folglich sinkt auch die Temperatur an den Arbeitsflächen des formenden Elementes.

Somit kann man mit Hilfe dieses Wärmeaustausch-Regelungssystems die Temperatur der Oberfläche des formenden Elementes auf einem erforderlichen Niveau aufrechterhalten, das eine hohe Leistung der Ausrüstung und die Qualität der geformten Erzeugnisse gewährleistet.

Beim Einsatz der erfindungsgemässen Einrichtung für die Formgebung des Kochgeschirrs aus einem temperaturwechselbeständigen Glas wurden die folgenden Resultate erzielt:

- die Formungsgeschwindigkeit von Erzeugnissen wurde um das 1,4- bis 2fache erhöht;
- an den Pressen wurde das stark rauschende und energieintensive System der Luftkühlung der formenden Elemente eliminiert;
- die Betriebsdauer der Formen wurde um das 1,5 bis 2fache verlängert;
- an den Erzeugnissen fehlte die Hämmerung (Welligkeit) vollständig, wodurch die Gebrauchsgestalt derselben beträchtlich verbessert werden konnte;
- die Masse von Erzeugnissen wurde um 15 bis 25% durch Verringerung der Stärke ihrer Wände vermindert.

Die erfindungsgemässe Einrichtung kann bei der Herstellung von Glaserzeugnissen durch Schleuderformen verwendet werden. Dazu ist es erforderlich, ein formendes Element, beispielsweise eine gemäss der Erfindung ausgeführte Matrize, in eine Zentrifuge einzusetzen und sie an der Welle der Zentrifuge mit Hilfe von bekannten Befestigungsvorrichtungen, zum Beispiel mittels Schrauben, zu befestigen. Des weiteren wird der Matrize eine Teilmenge Glasmasse zugeführt und zugleich die Rotation derselben eingeleitet, während welcher die Formgebung eines Erzeugnisses vor sich geht. Dann wird die Zentrifuge stillgesetzt und das Erzeugnis aus der Matrize entnommen. In diesem Augenblick kann erforderlichenfalls das Kältemittel, beispielsweise Druckluft, der Temperaturregelungs-Kammer zugeleitet werden. Das Wärmeaustausch-Regelungssystem dieser Einrichtung wird wahrend ihrer Arbeit die Entnahme grosser Wärmestrome in den heissesten Abschnitten und eine gleichmässige Wärmeverteilung über die gesamte Arbeitsfläche der Matrize sicherstellen. Dadurch wird es möglich sein, das Arbeitstempo der Zentrifuge durch Vermeidung lokaler Überhitzungen der Arbeitsflächen der Matrize wesentlich zu erhöhen und den Ausschuss bei Erzeugnissen hinsichtlich der Wandstärke (Wanddickendifferenz) durch isotherme Verteilung von Temperaturen auf den formgebenden Oberflächen auf ein Mindestmass herabzusetzen.

Die erfindungsgemässe Einrichtung kann bei der Formgebung von Glaserzeugnissen durch Senken verwendet werden. Dazu ist es erforderlich, ein formendes Element, beispielsweise eine Matrize gemäss der Erfindung, in einer Thermokammer anzuordnen (für den Fall einer stationären Art des Senkens) oder sie mit Hilfe von bekannten Befestigungsvorrichtungen auf einem Drehtisch zu befestigen, der dann die Matrize in eine Thermokammer bewegt (für den Fall einer dynamischen Art des Senkens). Auf die Matrize wird ein Glasrohling aufgesetzt und in der Thermokammer zusammen mit der Matrize gemäss der erforderlichen Verfahrensweise aufgeheizt. Dabei nimmt der Glasrohling eine Form an, die der (formgebenden) Aussenkontur der Matrize entspricht.

Das Wärmeaustausch-Regelungssystem dieser Einrichtung wird es ermöglichen, die Wärme über die formgebende Oberfläche gleichmässig zu verteilen, und wird isotherme Bedingungen für die Formgebung des Erzeugnisses schaffen. Dies wird es erlauben, Restspannungen im Fertigerzeugnis auf ein Minimum zu reduzieren, welche seine optischen Eigenschaften herabsetzen und im weiteren in Form eines Risses relaxieren können.

Am effektivsten kann die vorgeschlagene Erfindung bei der Pressformung von Glaserzeugnissen mit erhöhten Anforderungen an die Oberflächengüte der Erzeugnisse, an deren Massen- und lichttechnische Daten benutzt werden.

Gewerbliche Verwertbarkeit

Die erfindungsgemäss vorgeschlagene Einrichtung kann auf dem Gebiet der Glasherstellung bei der Formgebung von Erzeugnissen aus verschiedenen Glasarten mit unterschiedlichen geometrischen Abmessungen eingesetzt werden. Sie ist für verschiedene Verfahren der Formgebung des Glases, solcher wie Pressformung, Pressblasen, Senken, Schleuderformen u.a. sowie bei der Formgebung von Erzeugnissen aus Kunststoffen, Glasfaserplasten, Metall verwendbar.

**Patentansprüche**

1.  Einrichtung zur Formgebung von Glaserzeugnissen, mit

    - einer Formausrüstung, die mindestens ein formendes Element (1) mit einem hermetisch dichten Hohlraum (2) umfasst, an dessen Innenfläche eine Schicht eines korrosions- und hitzefesten porösen Materials (5) angeordnet ist,

- einem zur intensiven Dampfbildung bei Formungstemperatur fähigen Material (8), das in dem Hohlraum (2) in einer Menge untergebracht ist, die etwas größer ist als die Menge dieses Materials (8), die zur Füllung des Hohlraumes (2) mit gesättigten Dämpfen und zur Tränkung der Schicht (5) des korrosions- und hitzefesten porösen Materials erforderlich ist,
- einer Vorrichtung zum Evakuieren des Hohlraumes (2) des formenden Elementes (1) und
- einer mit einer Kältemittelquelle in Verbindung stehenden Vorrichtung zur Temperaturregelung des in dem Hohlraum (2) untergebrachten Materials,

**dadurch gekennzeichnet, daß**

- der hermetisch dichte Hohlraum (2) des formenden Elementes (1) durch wenigstens eine vertikale Trennwand (4) in Sektionen (3) unterteilt ist, die im Hohlraum (2) des formenden Elementes (1) starr befestigt ist, wenigstens eine Schicht eines korrosions- und hitzefesten porösen Materials (5) umfasst und Sektionen (3) verbindende durchgehende Öffnungen (7) aufweist, und
- die Vorrichtung zur Temperaturregelung des zur intensiven Dampfbildung bei der Formungstemperatur fähigen Materials (8) von einer im oberen Teil des formenden Elementes (1) ausgebildeten Kammer (10) gebildet wird.

2. Einrichtung zur Formgebung von Glaserzeugnissen nach Anspruch 1, **dadurch gekennzeichnet, daß** mindestens eine vertikale Trennwand (3) den Hohlraum (2) des formenden Elementes (1) in im wesentlichen gleichgroße Sektionen (3) unterteilt.

3. Einrichtung zur Formgebung von Glaserzeugnissen nach Anspruch 2, **dadurch gekennzeichnet, daß** bei der Unterteilung des hermetisch dichten Hohlraumes (2) des formenden Elementes (1) in Sektionen (3) mittels mindestens zweier vertikaler Trennwände (4) in diesem Hohlraum (2) wenigstens eine Tragstütze (6) vertikal aufgestellt und starr befestigt ist, an deren Aussenfläche mindestens eine Schicht eines korrosions- und hitzefesten porösen Materials angeordnet ist, wobei jede vertikale Trennwand (4) mit ihrem einen Ende an dieser Tragstütze (6) starr befestigt ist.

4. Einrichtung zur Formgebung von Glaserzeugnissen nach Anspruch 2 oder 3, **dadurch gekenn-**

zeichnet, daß in jeder Sektion (3) an der Innenfläche des formenden Elementes (1) unter der Schicht eines korrosions- und hitzefesten porösen Materials (5) senkrechte Nuten (9) eingearbeitet sind, deren Tiefe jeweils das 1,0 bis 3,0-fache ihrer Breite beträgt, während der Abstand zwischen den Nuten (9) im wesentlichen der Nutbreite entspricht.

5. Einrichtung zur Formgebung von Glaserzeugnissen nach Anspruch 3, **dadurch gekennzeichnet, daß** an der Aussenfläche der Tragstütze (6) unter der Schicht eines korrosions- und hitzefesten porösen Materials senkrechte Nuten (9) eingearbeitet sind, deren Tiefe jeweils das 1,0 bis 3,0-fache ihrer Breite beträgt, während der Abstand zwischen den Nuten (9) im wesentlichen der Nutbreite entspricht.

6. Einrichtung zur Formgebung von Glaserzeugnissen nach Anspruch 1, **dadurch gekennzeichnet, daß** die Kammer (10) der Vorrichtung zur Temperaturregelung im oberen Teil des Hohlraumes (2) des formenden Elements (1) von einer Quertrennwand (11) gebildet wird, die mit ihrem Umfang an der Oberfläche des formenden Elementes (1) starr befestigt ist.

7. Einrichtung zur Formgebung von Glaserzeugnissen nach Anspruch 6, **dadurch gekennzeichnet, daß** die Quertrennwand (11) als gekrümmte Platte ausgebildet ist, die in ihrem Zentralteil nach der Seite des hermetisch dichten Hohlraumes (2) des formenden Elements (1) hin ragt.

8. Einrichtung zur Formgebung vnn Glaserzeugnissen nach Anspruch 1, **dadurch gekennzeichnet, daß** die Kammer (27) der Vorrichtung zur Temperaturregelung von einer ringförmigen geschlossene Sektion (36) gebildet wird, die sich im oberen Teil der Wand des formenden Elementes (1) befindet.

**Claims**

1. A device for forming glass articles, comprising:

- forming equipment including at least one forming element (1) having a hermetically sealed interior space (2), the interior surface of said element being provided with a layer of a corrosion- and heat-resistant porous material (5),
- a material (8) capable of intense vapor formation at the forming temperature, said material being accommodated in the space (2) in an amount somewhat exceeding the amount of said material (8) required for filling the space (2) with saturated vapors and impregnating the layer (5) of the corrosion- and heat-resistant material,

- a device for evacuating the space (2) of the forming element (1), and
- a device for temperature control of the material accommodated in the space (2), said device communicating with the source of a refrigerant,

   **CHARACTERIZED in that**

- the hermetically sealed space (2) of the forming element (1) is divided into sections (3) through at least one vertical partition (4) which is held in place in the space (2) of the forming element (1), incorporates at least one layer of the corrosion- and heat-resistant material (5), and has open-end holes (7) communicating the sections (3) with one another, and
- the device for temperature control of the material (8) capable of intense vapor formation at the forming temperature is established by a chamber (10) provided in the upper portion of the forming element (1).

2. The device for forming glass articles as claimed in claim 1, **CHARACTERIZED in that** at least one vertical partition (3) subdivides the space (2) of the forming element (1) into the substantially equal-size sections (3).

3. The device for forming glass articles as claimed in claim 2, **CHARACTERIZED in that** when dividing the hermetically sealed space (2) of the forming element (1) into the sections (3) through the use of at least two vertical partitions (4), at least one support upright (6) is mounted vertically in said space (2) and held in place therein, the external surface of said upright is provided with at least one layer of the corrosion- and heat-resistant material, and each of the vertical partitions (4) is held in place, with one of its ends, to said upright (6).

4. The device for forming glass articles as claimed in claim 2 or claim 3, **CHARACTERIZED in that** provision is made in each section (3) for vertical grooves (9) made on the internal surface of the forming element (1) under the layer of the corrosion- and heat-resistant porous material, the depth of each of said grooves being from 1.0 to 3.0 the width thereof, and the spacing between the grooves (9) substantially corresponds to the groove width.

5. The device for forming glass articles as claimed in claim 3, **CHARACTERIZED in that** provision is made for vertical grooves (9) made on the external surface of the support upright (6) under the layer of the corrosion- and heat-resistant porous material, the depth of each of said grooves being from 2.0 to 3.0 the width thereof, and the spacing between the grooves (9) substantially corresponds to the groove width.

6. The device for forming glass articles as claimed in claim 1, **CHARACTERIZED in that** the chamber (10) of the temperature control device is established in the upper portion of the space (2) of the forming element (1) through the use of a transverse partition (11) held in place along its periphery to the surface of the forming element (1).

7. The device for forming glass articles as claimed in claim 6, **CHARACTERIZED in that** the transverse partition (11) appears as a curved plate having a central portion extending towards the hermetically sealed space (2) of the forming element (1).

8. The device for forming glass articles as claimed in claim 6, **CHARACTERIZED in that** the chamber of the temperature control device (27) is established by a closed annular section (36) disposed in the upper portion of the wall of the forming element (1).

**Revendications**

1. Dispositif pour former les articles en verre comportant :

- un équipement de formage, comprenant , au moins, un élément de formage (1) ayant une cavité étanche (2) sur la surface interieure duquel est placée une couche de matériau (5) poreux résistant à la corrosion et à la chaleur,
- le matériau (8) qui est susceptible de former intensivement la vapeur à la température du formage et logé dans la cavité (2) en quantité supérieure quelque peu à la quantité de ce matériau (8) nécessaire pour remplir la cavité (2) des vapeurs saturées et imprégner la couche (5) de matériau (5) poreux résistant à la corrosion et à la chaleur,
- un dispositif destiné à mettre sous vide la cavité (2) de l'élément de formage (1) et
- un dispositif destiné à la thermorégulation du matériau, logé dans la cavité (2) et mis en communication avec une source d'agent frigorifique,

   **caractérisé en ce que**

- la cavité étanche (2) de l'élément de formage (1) est divisée en sections (3) par au moins une cloison verticale (4) qui est fixée à demeure dans la cavité (2) de l'élément de formage (1), comporte au moins une couche de matériau (5) poreux résistant à la corrosion et à la chaleur et comprend des trous débouchants reliant les sections (3) et **en ce que**

- le dispositif de thermorégulation du matériau (8) susceptible de former intesivement la vapeur à la température du formage est constitué par une chambre (10), réalisée à la partie supérieure de l'élément de formage (1).

2. Dispositif pour former les articles en verre selon la revendication 2, **caractérisé en ce qu'**au moins une cloison verticale (3) divise la caité (2) de l'élément de formage (1) en sections (3) sensiblement identiques selon leurs grandeurs.

3. Dispositif pour former les articles en verre selon la revendication 2, **caractérisé en ce que** dans le cas où la cavité étanche (2) de l'élément de formage (1) est divisée en sections (3) par au moins deux cloisons verticales (4), on monte dans cette cavité (2) verticalement et on fixe à demeure au moins un poteau porteur (6) sur la surface extérieure duquel est placée au moins une couche de matériau poreux résistant à la corrosion et à la chaleur, **en ce que** chaque cloison verticale (4) est fixée à demeure par une extrémité sur ledit poteau (6).

4. Dispositif pour former les articles en verre selon les revendications 2 et 3, **caractérisé en ce que** les rainures verticales (9) sont pratiquées dans chaque section (3) sur la surface intérieure de l'élément de formage (1) sous la couche de matériau (5) poreux résistant à la corrosion et à la chaleur, **en ce que** la profondeur de chacune desdites rainures constitue 1,0 à 3,0 de sa largeur et que le pas entre les rainures (9) correspond esentiellement à la largeur de la rainure.

5. Dispositif pour former les articles en verre, selon la revendication 3? **caractérisé en ce que** les rainures verticales (9) sont réalisées sur la surface extérieure du poteau porteur (8) sous la couche de matériau poreux résistant à la corrosion et à la chaleur, **en ce que** la profondeur de chacune desdites rainures constitue de 1,0 à 3,0 de sa largeur tandis que le pas entre les rainures (9) correspond essentiellement à la largeur de la rainure.

6. Dispositif pour former les articles en verre, selon la revedication 1, **caractérisé en ce que** la chambre (10) du dispositif de thermorégulation est formée à la partie supérieure de la cavité (2) de l'élément de formage (1) à l'aide d'une cloison transversale (11) fixée à demeure suivant toute sa périphérie sur la surface de l'élément de formage (1).

7. Dispositif pour former les articles en verre selon la revendication 6, **caractérisé en ce que** la cloison transversale (11) est réalisée en forme d'une plaque courbée qui fait saillie à sa partie centrale dans la direction de la cavité étanche (2) de l'élément de formage (1).

8. Dispositif pour former les articles en verre selon la revendication 6, **caractérisé en ce que** la chambre du dispositif (27) de thermorégulation est formée par une section annulaire close (36), montée à la partie supérieure de la paroi de l'élément de formage (1).

EP 0 757 019 B1

*FIG.1*

*FIG.2*

FIG. 3

FIG. 4

FIG.5

FIG.6